# EUROPEAN PATENT SPECIFICATION

(11) **EP 2 257 393 B1**
(45) Date of publication and mention of the grant of the patent: **03.12.2014**
(21) Application number: 09713925.7
(22) Date of filing: 27.02.2009
(51) Int. Cl.: B09B 3/00, C02F 11/04, C12P 5/02

(54) **METHOD FOR ENZYMATIC HYDROLYSIS OF ORGANIC WASTE**
VERFAHREN ZUR ENZYMATISCHEN HYDROLYSE VON ORGANISCHEM ABFALL
PROCEDE D'HYDROLYSE ENZYMATIQUE DE DECHETS ORGANIQUES

(30) Priority: 27.02.2008 NO 20081027
(43) Date of publication of application: 08.12.2010
(73) Proprietor: Aasen, Nils Einar, 3036 Drammen (NO)
(72) Inventor: Aasen, Nils Einar, 3036 Drammen (NO)
(74) Representative: Coward, Bjarne G.
(86) International application number: PCT/NO2009/000071
(87) International publication number: WO 2009/108069

(56) References cited:
- EP-A1- 0 951 837
- WO-A2-2007/133093
- US-A1- 2004 140 261
- US-A1- 2007 039 363

## Description

The present invention relates to a method for enzymatic hydrolysis of organic by-products and also application of marine enzymes for hydrolysis of organic by-products.

Wet-organic by-products are some of the most polluting and environmentally damaging by-products that are produced by society. They pollute the environment with odours and rat infestations, contribute to unwanted bacterial growth and increase the release of environmentally unfriendly gases.

The ultimate aim of the present invention is to increase the utilisation of the organic waste as a resource, at the same time as the release of climatic gases and environmental poison from the waste diminish. It is possible with the help of the present invention to trap this unwanted residual value and, for example, utilise it as fuel for a biogas installation without polluting the environment.

Today, most of the waste is burnt, with an average degree of utilisation of about 75%. Today's technology does not remove the release of CO₂.

Food waste and other wet organic waste fractions can be suited to production of biogas, readily in combination with fertilisers from farming. This represents a considerable renewable energy source and will be able to replace a part of the fossil fuel.

Wet organic by-products encompass food wastes from industrial kitchens, processing industries and abattoir wastes from animals and fish, in addition to by-product from households.

By-products from "animal" abattoirs were previously used as animal fodder, but because of the danger of Creuzfeld Jacob Syndrome, it is forbidden to use such waste as animal fodder today. Today, animal by-products are incinerated, for example, in connection with production of cement.

By-products from marine sources (for example, fish) are used in silage (acid preservation) as raw material for animal feed (pig, chicken, etc).

Household wastes from industrial kitchens and private households are today collected and deposited for composting or burnt in an incineration plant. This handling is cost demanding, polluting and resource demanding. Because of the poor keeping quality of the waste, it must be collected often. Logistically, this is a cost demanding and polluting activity because of the small amounts, frequent collection and dispersed distribution.

Industrial kitchens and abattoirs are the largest producers of wet organic by-products.

Besides being cost demanding and polluting, existing solutions provide only limited utilisation of proteins, fats and/or energy.

There are many known solutions for different types of destruction for the treatment of organic waste:
WO2007/033425
US2005/0155931
EP1535673
WO01/28931
WO02/057431
EP 1195097
WO98/45228
KR 20050090184
JP 2005177699
JP2003340411
JP 2002301452
DE 4101039
JP 2003275721
JP200689234
JP 2004050143
DE 10108495
JP 11099375

All these documents describe addition of enzymes, some of the documents describe use of microbial enzymes, while others only describe use of enzymes in general.

US 2004/140261 describes a method for processing of organic waste material such as abattoir waste, household waste and the like, by hydrolysis in the presence of enzymes.

US2007/039363 describes a system for industrial production of fertilizer by a progressive digestion process whereby organic matter is digested by optimizing, under controlled conditions, the natural digestive process indigenous to any degrading organic material.

In addition, NO 320499 describes use of enzymes in processing of organic material for use as food or animal feed. How a source of protein is first treated with acid and thereafter pepsin from the stomach of Atlantic cod is described, where the aim is to make a peptide concentrate for use in animal feed.

Enzymes from marine farming hydrolyse effectively at temperatures in the range 5 - 20 °C.

The aim of the present invention is to provide a method for processing organic waste which is simple and economic.

Another aim of the invention is to provide a method which will lead to a stable product that can be kept over a long time and which has a consistency that allows it to be pumped so that it can be transported further for final processing.

The inventor has found that it can be advantageous to hydrolyse the organic waste in the presence of marine enzymes, that come from, for example, farming or catches of marine organisms. Marine enzymes are broad spectrum and hydrolyse fats, proteins and carbohydrates of animal, marine and vegetable origin. Furthermore, it has been found that fish offal, for example, from farmed fish, can be a suitable source of marine enzymes.

Said enzymes will hydrolyse effectively in temperature ranges as low as 5 - 20 °C, but the hydrolysis can also be carried out at temperatures up to 40 °C. However, to carry out the hydrolysis at temperatures above the ambient temperature will require a supply of energy.

Hydrolysis of proteins (to peptides and amino acids), carbohydrates (to mono-, di- and tri saccharides, etc.) and fats ensures a rapid and safe preservation of the raw material.

Practically, it has been found that the organic waste should firstly be ground in suitable equipment, whereby the hydrolysis can be carried out more effectively. It has been found that the grinding down is simplest to conduct in the presence of a preserving acid and that the pH of the mixture is controlled accurately. In the grinding down process one gets a mixture of smaller particles or a mass which is suited to hydrolysis. A suitable pH lies in the range 3-4, preferably pH 3.4-3.8. Suitable acids can be formic acid which is partially neutralised with ammonia, mixtures of formic acid and propionic acid or propionic acid on its own. Addition of marine enzymes can be carried out in that one at first prepares silage by griming down fish waste together with the above mentioned acids and regulates the pH to the same value as the mixture of organic wastes with acid. A series of experiments have been carried out with varying amounts of silage and at different temperatures.

The above mentioned and further aims and advantages are achieved by the characteristics that are given in the independent claim 1. Further advantageous embodiments are given in the dependent claim 2.

The invention will now be described in more detail in the following with reference to the enclosed figures, examples and tables.

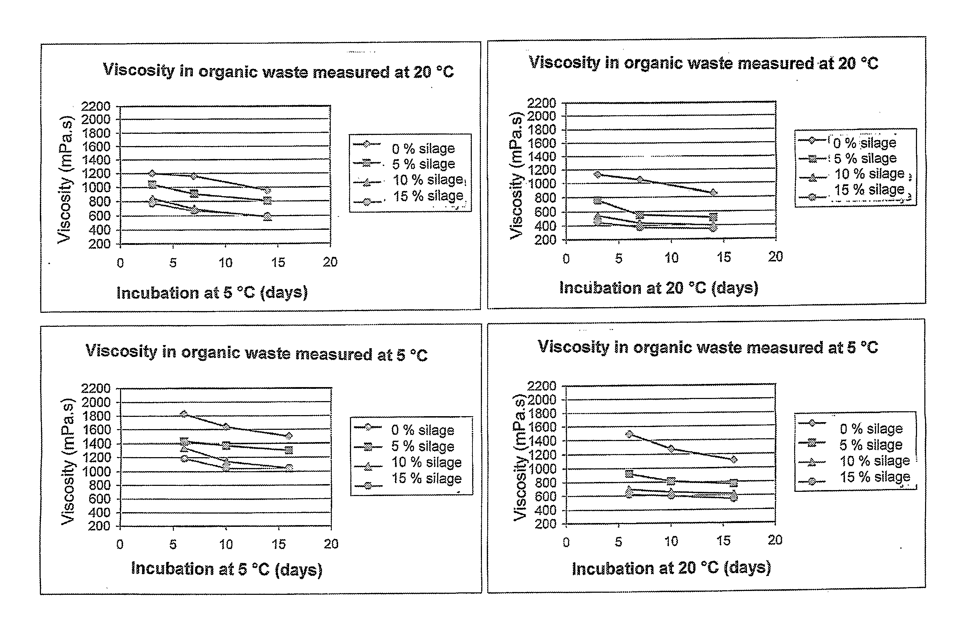

Fig. 1 is a curve that shows viscosity of processed organic waste with varying amounts of added silage.

The hydrolysis causes the material to be watery (the water activity increase with the degree of hydrolysis - releases intra- and intercellular water) with low viscosity. The stability increases in relation to the sedimentation. Faster distribution of preserving agent because of the high water activity and low viscosity ensures satisfactory lowering of pH in the "whole" of the material and helps the hydrolysis.

In this way, sufficient preservation and microbial stability, desired consistency (dependent on the degree of hydrolysis) and a small extent of precipitated matter are quickly achieved. After this processing, the stabilised material will be pumpable, having a relatively low viscosity, be stable with respect to microbial activity and be able to be stored in closed tanks with low odour/gas generation.

The advantage with this technology with regard to the invention is that a quick transfer from highly viscous/solid phase to a liquid phase is obtained. Larger chunks need longer times to be stabilised, due to the diffusion of preserving agent taking a longer time and that one thereby has a larger possibility for unwanted microbial growth.

At the same time, the raw materials will be easier to "administer" in that larger particles are hydrolysed to molecule size and thereby are easier to dissolve in a suspension / emulsion. This "physical state" ensures that there is better distribution of preserving agent in the material, and that the by-products are adjusted to industrial processes. The amount of precipitated matter is considerably reduced and one can counteract sedimentation / build-up of solid "matter" from precipitated material in storage tanks with moderate stirring.

Liquid products are adapted to industrial processes, and give better HMS conditions in the production and storage and application as raw material for bio energy.

The energy in chemical compounds lies in the bonds. In that the material is hydrolysed to a molecule level with enzymes, the processes for further degradation /recovery will be more economically rewarding. The fine distribution of the material - the hydrolysis requires relatively smaller amounts of added energy as long as one operates at temperatures from 5 to 20 °C.

The invention thereby relates to application of marine enzymes from fish offal to hydrolysis of organic by-products to obtain sufficient degree of hydrolysis and homogeneity in a mass of by-products which, among other things, contain fats, proteins and carbohydrates.

This application of marine enzymes is not known previously and will lead to a better storage stability, easier dissociation of preserving agent, reduced microbial activity and a more cost effective application and utilisation of organic by-products.

The present invention relates to effective fine distribution /hydrolysis and preservation of by-products and safer use of the preserved organic material in biological processes which can be used for utilisation of the energy in the material. Enzymatic hydrolysis reduces the need for energy demanding grinding of the material.

With the help of the method according to the present invention it is possible to obtain a slurry which has a viscosity of 500-350 mPa.s at 20 °C.

Wet organic material from animal, vegetable and marine sources are preserved and hydrolysed by the addition of acids that lower the pH. This preserves / inactivates unwanted microbial activity.

In that the pH of the material is lowered to an optimal level for the digestive enzymes which are added to the material in the form of silage / enzymes from marine raw materials, the enzymatic process is optimised.

### EXAMPLE

The presented shows processing of food waste with the use of enzymes from fish offal. The food waste comprises sausages/minced meat, fish, bread and vegetables with a mass ratio in descending order. The food waste is twice ground in a meat grinder together with formic acid (80%) to pH 3.8. The mass ratio food waste/acid is not critical, what is essential is that one gets the mixture to a desired ph value. The enzymes are added in the form of silage made from fish offal ground twice in the meat grinder together with formic acid to pH 3.8.

The fish silage is added to the ground organic waste material in amounts of 5, 10 and 15 volume% respectively. The hydrolysis is carried out at 5 and 20 °C, respectively and further stored at the respective temperatures.

A series of samples were taken to analyse for salmonella, Enterobacteriaceae, E coli, C perfingens, mould/yeasts, and also the extent of hydrolysis and viscosity. The results for the last two parameters are shown in the following tables. The other analysis only showed negligible values. Salmonella was not found.

**Table I**

| Temp °C | Silage | Start | 3 days | 7 days | 14 days |
|---|---|---|---|---|---|
| 5 | 0% | 6.0 | 6.8 | 6.4 | 7.0 |
| 5 | 5% | 7.5 | 8.8 | 8.7 | 10.6 |
| 5 | 10% | 9.0 | 11.1 | 12.8 | 13.2 |
| 5 | 15% | 9.5 | 12.7 | 15.0 | 15.7 |
| 20 | 0% | 6.0 | 7.3 | 6.9 | 7.3 |
| 20 | 5% | 7.5 | 11.5 | 12.8 | 14.9 |
| 20 | 10% | 9.0 | 15.4 | 16.6 | 18.9 |
| 20 | 15% | 9.5 | 17.8 | 21.1 | 23.1 |

The hydrolysis tests were performed at incubation temperatures of 5 and 20 °C, respectively, with varying additions of silage and residence times up to 14 days. Table I shows the extent of hydrolysis measured by formol titration (%).

**Table II**

| Temp °C | Silage | 3 days | 7 days | 14 days |
|---|---|---|---|---|
| 5 | 0% | 1200 | 1160 | 957 |
| 5 | 5% | 1040 | 910 | 808 |
| 5 | 10% | 840 | 693 | 576 |
| 5 | 15% | 773 | 669 | 588 |
| 20 | 0% | 1130 | 1050 | 857 |
| 20 | 5% | 760 | 552 | 510 |
| 20 | 10% | 541 | 431 | 395 |
| 20 | 15% | 444 | 371 | 344 |

The viscosity was measured in mPa.s at 20 degrees C after residence times of 3, 7 and 14 days, respectively.

**Table III**

| Temp °C | Silage | 6 days | 10 days | 16 days |
|---|---|---|---|---|
| 5 | 0% | 1830 | 1640 | 1500 |
| 5 | 5% | 1430 | 1370 | 1300 |
| 5 | 10% | 1340 | 1140 | 1040 |
| 5 | 15% | 1180 | 1040 | 1040 |
| 20 | 0% | 1490 | 1280 | 1110 |
| 20 | 5% | 920 | 808 | 770 |
| 20 | 10% | 694 | 653 | 621 |
| 20 | 15% | 618 | 596 | 548 |

The viscosity was measured at 5 degrees C and incubation temperatures of 5 and 20 degrees C and residence times of 6, 10 and 16 days.

The product which was produced after this processing had a relatively low viscosity which was reached after a short period of hydrolysis. The mixture was periodically stirred gently to prevent sedimentation.

As can be seen in the tables, good results were obtained at addition of 5% silage, while increasing to 10% added silage showed to be beneficial. A further increase of addition of silage to 15% gave very little improvement. Best effect was obtained at 20 degrees C, but a certain amount of degradation and increase of extent of hydrolysis and lowering of the viscosity were also obtained at addition of 5% silage only.

The viscosity of the food waste is shown in figure 1 as a function of silage addition and residence time/ incubation at 20 °C. The viscosity was measured at 20 °C.

A rapid preservation of organic by-products (food waste) is obtained which has a starting point of a high microbial standard - (satisfies requirement for food articles) and treats the raw material immediately with preservation agents that inactivate the microbial activity.

Another advantage with the use of fish offal as a source for enzymes was found to be that fats in the organic waste were also broken down. This is assumed to be due to the fish offal also containing bile.

A complete installation for preservation and storage of the stabilised material can be placed at the shop, restaurant, hotel, processing site, etc. that produces the by-product. The preserved material will, to a small extent, generate odours and other pollutants in the areas where it is stored.

In that the material is stabilised and transformed to a liquid state, one will achieve a more effective logistic at large intervals between each collection/delivery. Mechanical transportation, comprising pumping the material from the storage tank to tank lorries and the further production is conducted at a low viscosity. The process is industrially suitable.

Another purpose of the invention which was achieved was that the preserved raw material was given an increased keeping quality / storage stability, and thereby presents an opportunity for an optimal use in relation to the production of, for example, biogas.

Another fact that favours this technology is that the raw materials can be relatively different as long as they are absent of items of metals (for example, knives and forks).

A further advantage of the invention is that the technology makes possible use of the raw materials independent of geographic limitations. The by-products have a trade value in line with other energy carriers.

The invention is not dependent on the type of raw materials, as the added enzyme mixture has a relatively broad spectrum.

The process of collecting, transporting and storage of the raw material will, to a large extent, be made mechanically and can be further automated with control units that control / monitor volume, pH, odour and temperature.

Another essential advantage is that this form of waste treatment will have a high microbial standard and contribute to increased hygienic standards on installations that produce, process, serve and consume food articles and wet organic products.

## Claims

1. Method for processing of organic waste materials, such as abattoir waste, household waste and the like, by hydrolysis in the presence of enzymes
**characterized by**
grinding down the organic material to a suitable size together with an organic acid chosen from formic acid, formic acid partially neutralized with ammonia, mixtures of formic acid and propionic acid or propionic acid on its own to pH 3-4; and
mixing this with a 5-15 vol. % of a silage which is fish offal ground down together with said acids and to the same pH,
and where the fish offal being the source for the enzymes,
and that the hydrolysis is performed down to molecular level for increasing the energy efficiency 5- 20 degrees Celsius,
until a pumpable slurry having a viscosity of 500-350 mPa.s. measured at 20 degrees Celsius is obtained.

2. Method according to claim 1,
**characterized in that**
grinding of the organic waste material and the fish offals together with the acid is carried out at pH 3.4-3.8.

## Patentansprüche

1. Verfahren zum Verarbeiten von organischen Abfallstoffen, wie Schlachthausabfall, Haushaltsabfall und dgl., durch Hydrolyse unter Anwesenheit von Enzymen
**gekennzeichnet durch**
Zerkleinern der organischen Stoffe auf eine geeignete Größe zusammen mit einer organischen Säure, ausgewählt aus Ameisensäure, teilweise mit Ammoniak neutralisierter Ameisensäure, Mischungen aus Ameisensäure und Propansäure oder Propansäure alleine bis pH 3-4; und
Mischen dessen mit 5-15 Vol.-% einer Silage, welche, zusammen mit den Säuren, auf den gleichen pH zerkleinerter Fischabfall ist,
und wobei der Fischabfall die Quelle für die Enzyme ist,
und wobei die Hydrolyse bis auf molekulare Ebene durchgeführt wird, um die Energieeffizienz um 5-20°C zu steigern,
bis ein pumpbarer Schlamm mit einer Viskosität von 500-350 mPa.s., bei 20°C gemessen, erhalten wird.

2. Verfahren nach Anspruch 1,
**dadurch gekennzeichnet, dass**
das Zerkleinern des organischen Abfallstoffs und des Fischabfalls zusammen mit der Säure bei pH 3,4-3,8 durchgeführt wird.

## Revendications

1. Procédé de traitement de matières de déchets organiques, tels que des déchets d'abattoir, des déchets ménagers et analogues, par hydrolyse en présence d'enzymes, **caractérisé par**:
le broyage de la matière organique à une dimension appropriée avec un acide organique choisi parmi l'acide formique, l'acide formique partiellement neutralisé avec de l'ammoniac, des mélanges d'acide formique et d'acide propionique ou l'acide propionique seul à un pH de 3 à 4; et
le mélange de cette mixture avec 5 à 15 pour cent en volume d'un fourrage qui est constitué de déchets de poisson broyés avec lesdites acides et au même pH, et dans lequel les déchets de poisson constituent la source des enzymes, et
l'hydrolyse est exécutée à un niveau moléculaire pour accroître le rendement énergétique à 5 à 20 degrés Celsius,
jusqu'à ce qu'une bouillie pompable présentant une viscosité de 500 à 350 mPa.s mesurée à 20 degrés Celsius soit obtenue.

2. Procédé selon la revendication 1, **caractérisé en ce que** le broyage de la matière de déchets organiques et des déchets de poisson de concert avec l'acide est exécuté à un pH de 3,4 à 3,8.
